# FASCICULE DE BREVET EUROPEEN

(11) **EP 3 942 155 B1**
(45) Date de publication et mention de la délivrance du brevet: **04.01.2023**
(21) Numéro de dépôt: 20726177.7
(22) Date de dépôt: 11.03.2020
(51) Int. Cl.: F01D 5/18, B22C 9/04

(54) **AUBE DE TURBOMACHINE D'AÉRONEF ET SON PROCÉDÉ DE FABRICATION PAR MOULAGE À CIRE PERDUE**
SCHAUFEL EINER FLUGZEUG-TURBOMASCHINE UND IHR FERTIGUNGSVERFAHREN MITTELS WACHSAUSSCHMELZGIESSEN
AIRCRAFT TURBOMACHINE BLADE AND ITS MANUFACTURING PROCESS BY LOST WAX CASTING

(30) Priorité: 22.03.2019 FR 1903021
(43) Date de publication de la demande: 26.01.2022
(73) Titulaire: Safran Aircraft Engines, 75015 Paris (FR)
(72) Inventeur: SLUSARZ, Michel, 77550 MOISSY-CRAMAYEL (FR); AUZILLON, Pierre, Guillaume, 77550 MOISSY-CRAMAYEL (FR); ENEAU, Patrice, 77550 MOISSY-CRAMAYEL (FR); OSTINO, Léandre, 77550 MOISSY-CRAMAYEL (FR)
(74) Mandataire: Gevers & Orès
(86) Numéro de dépôt international: PCT/FR2020/050496
(87) Numéro de publication internationale: WO 2020/193899

(56) Documents cités:
- EP-A1- 3 450 683
- EP-A2- 0 945 595
- CN-B- 104 493 081
- FR-A1- 2 874 186
- US-A1- 2011 016 717
- US-A1- 2016 208 620

## Description

### Domaine technique de l'invention

La présente invention concerne notamment une aube de turbomachine d'aéronef et son procédé de fabrication par moulage à cire perdue.

### Arrière-plan technique

L'état de l'art comprend notamment le document FR-A1-2 874 186 de la Demanderesse et les documents EP-A1-3 450 683, US-A1-2016/208620, EP-A2-0 945 595, CN-B-104 493 081 et US-A1-2011/016717.

Les aubes de turbomachine et en particulier de turbine sont soumises à des contraintes thermiques élevées et comprennent des cavités internes de circulation d'un fluide de ventilation, généralement de l'air dans le cas d'un moteur à turbine à gaz.

Ces aubes sont maintenant généralement fabriquées par moulage à cire perdue. Cette technique consiste à réaliser un modèle en cire ou autre matériau provisoire équivalent, de la pièce que l'on veut mouler. On enveloppe le modèle dans un moule carapace en céramique. Celui-ci est fabriqué par des trempages successifs du modèle dans des barbotines contenant une matière céramique et le stucage de la couche formée entre chaque trempage. On sèche le moule, on élimine la cire qu'il contient par une première cuisson à une température adaptée puis on fait cuire le moule à une température élevée pour lui conférer la résistance nécessaire à la coulée. Il reste alors l'image du modèle en creux dans laquelle on coule le métal en fusion. Après refroidissement, on casse le moule pour dégager la pièce. Celle-ci subit ensuite un simple traitement de finition.

Lorsque l'aube comprend des cavités pour la circulation du flux d'air de refroidissement, il faut incorporer dans le modèle un ou plusieurs noyaux. Cette phase du procédé comprend d'abord la fabrication séparée du ou des noyaux par moulage d'une matière céramique consolidée par un liant, leur assemblage le cas échéant, et la mise en place du ou des noyaux dans un moule à cire. On moule ainsi un modèle par injection de cire dans le moule à cire. Le modèle forme la réplique de la pièce à obtenir.

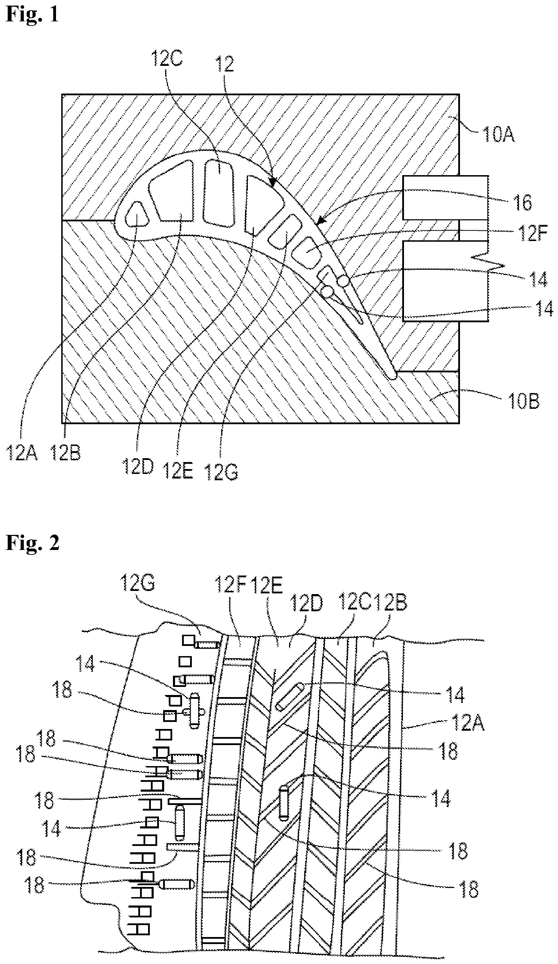

On a représenté sur la figure 1, en coupe perpendiculaire à l'axe de la pièce, un moule à cire 10 dont la paroi interne est l'image de la pièce à obtenir. Ce moule est ici en deux parties 10A et 10B. On a disposé dans ce moule un noyau 12. Le noyau 12 ici est composé d'une pluralité de branches 12A à 12G parallèles entre elles et rattachées à une racine commune. Les branches définissent entre elles des espaces qui formeront des cloisons après coulée du métal. Pour assurer le calage du noyau 12 à l'intérieur du moule, on prévoit des entretoises 14 par exemple en platine. La fonction de ces entretoises est de maintenir un espace entre les parois du noyau 12 et la paroi interne 16 du moule voire éventuellement entre les branches 12A-12G du noyau. Quand on injecte la cire, on évite ainsi que, par un déplacement inopportun du noyau, les couches et les cloisons formées soient irrégulières.

Comme cela est représenté à la figure 2, les entretoises 14 précitées sont logées dans des motifs en creux de la paroi du noyau 12 Ces motifs peuvent être obtenus au moment de la formation du noyau ou bien être usinés. Les entretoises 14 ont en général une forme allongée, comme une tige ou une aiguille, et sont placées sur le noyau en étant couché dans le sens de sa longueur (qui s'étend le long de l'axe longitudinal de l'aube, qui est un axe sensiblement radial par rapport à l'axe longitudinal de la turbomachine dans laquelle elle est montée). Ces motifs en creux s'étendent donc dans une direction particulière.

Un noyau 12 comporte en outre d'autres motifs en creux 18 sur sa paroi qui s'étendent dans une autre direction, pour définir des perturbateurs d'écoulement de fluide dans la cavité de l'aube. Comme cela est visible à la figure 2, il arrive que les motifs en creux destinés 18 à définir les perturbateurs et les logements des entretoises 14, soient confondus ou du moins se chevauchent mutuellement.

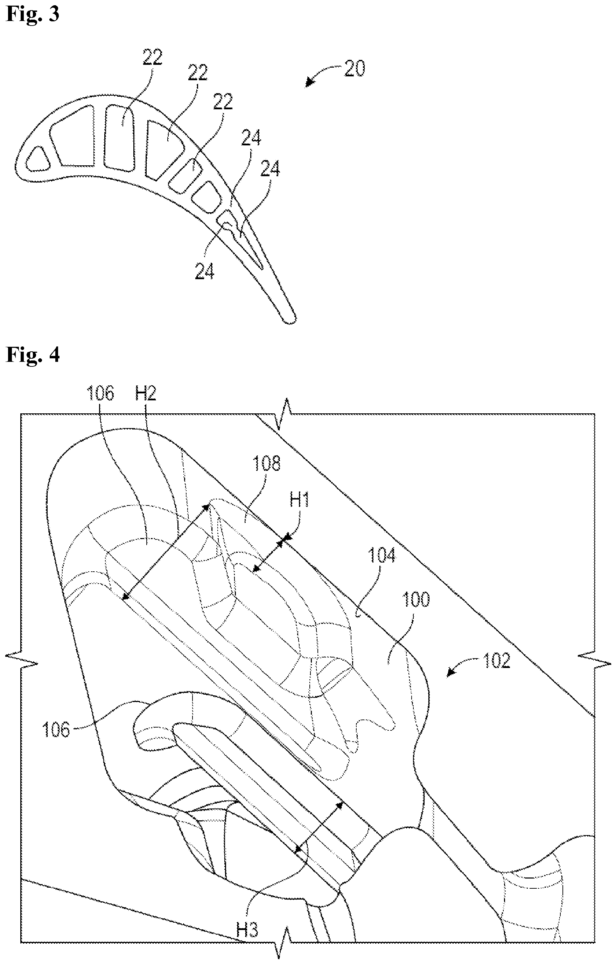

L'étape suivante consiste à former un moule céramique autour du modèle obtenu après son extraction du moule 10. La cire est ensuite éliminée du moule puis le métal en fusion est coulé dans le moule et remplit l'espace entre les parois du moule et celles du noyau. On élimine après un traitement approprié, les éléments constituant le noyau pour obtenir les cavités. On obtient la pièce et en particulier l'aube 20 représentée à la figure 3.

Le métal en fusion est destiné à occuper les espaces entre les branches 12A-12G et entre le noyau et le moule pour former les cloisons et les parois des cavités 22, et également à occuper les évidements des motifs en creux du noyau pour former des éléments en saillie 24 sur ces parois des cavités (cf., figure 3). Comme évoqué précédemment, du fait du chevauchement de certains motifs en creux du noyau, certains éléments en saillie se chevauchent mutuellement dans les cavités de l'aube.

Cependant, dans ces zones de chevauchement, les perturbateurs perdent leur fonction et ne provoquent pas de turbulences dans le flux d'air de ventilation, ce qui a un impact non négligeable sur l'efficacité du refroidissement de l'aube en réduisant significativement le coefficient d'échange thermique entre l'aube et ce flux.

L'invention a pour but de remédier à ce problème et de faire en sorte que la fonction des perturbateurs dans la cavité d'une aube ne soit pas altérée par la présence et le chevauchement d'autres éléments en saillie de cette cavité.

### Résumé de l'invention

La présente invention concerne une aube de turbomachine d'aéronef, cette aube comportant au moins une cavité interne de circulation d'un flux d'air de ventilation, cette cavité comportant une paroi qui comprend des premiers éléments en saillie orientés dans au moins une première direction et formant des perturbateurs du flux d'air, cette paroi comportant en outre au moins un deuxième élément en saillie orienté dans au moins une deuxième direction différente de la première direction, ce deuxième élément et au moins un des premiers éléments se chevauchant mutuellement dans une zone, caractérisée en ce que le ou chaque premier élément qui chevauche le deuxième élément a une hauteur supérieure à celle du deuxième élément dans ladite zone et qui est supérieure à celle des autres premiers éléments de la paroi, pour conserver sa fonction de perturbateur sur toute son étendue.

Dans la présente demande, on entend par hauteur d'un élément en saillie, une dimension de cet élément mesurée le long d'une direction normale à la surface sur laquelle il est en saillie.

On comprend donc que, bien que les premiers et deuxième éléments puissent se chevaucher, les premiers éléments sont toujours plus haut que le deuxième élément et sont donc toujours en saillie à l'intérieur de la cavité de façon à conserver leur fonction de perturbateur de flux.

L'aube selon l'invention peut comprendre une ou plusieurs des caractéristiques suivantes, prises isolément les unes des autres ou en combinaison les unes avec les autres :
- les directions des premiers et deuxième éléments sont sensiblement perpendiculaires l'une par rapport à l'autre ou les unes par rapport aux autres ;
- les directions des premiers et deuxième éléments sont inclinées l'une par rapport à l'autre ou les unes par rapport aux autres ;
- le ou chaque premier élément et/ou ledit deuxième élément a une forme générale allongée ;
- un seul des premiers éléments chevauche ledit deuxième élément et forme avec ce dernier une croix ;
- deux des premiers éléments chevauchent ledit deuxième élément et forment des branches sur deux côtés opposés de ce deuxième élément ;
- le ou chaque premier élément qui chevauche ledit deuxième élément a une hauteur qui varie et est maximale dans ladite zone.

La présente invention concerne encore un noyau en céramique pour la fabrication d'une aube telle que décrite ci-dessus, par un procédé de fabrication par moulage à cire perdue, ce noyau comportant une partie configurée pour former ladite cavité interne et comportant, d'une part, des premiers motifs en creux orientés dans au moins une première direction et configurés pour former lesdits premiers éléments en saillie, et d'autre part, au moins un deuxième motif en creux orienté dans au moins une deuxième direction différente de la première direction et formant un logement pour une entretoise, ce deuxième motif et au moins un des premiers motifs se chevauchant mutuellement dans une zone, caractérisé en ce que le ou chaque premier motif qui chevauche le deuxième motif a une profondeur supérieure à celle du deuxième motif dans ladite zone et supérieure à celle des autres premiers motifs en creux.

Dans la présente demande, on entend par profondeur d'un motif en creux, une dimension de ce motif mesurée le long d'une direction normale à la surface de fond de ce motif.

La présente invention concerne également un procédé de fabrication d'une aube telle que décrite ci-dessus, par un procédé de fabrication par moulage à cire perdue, au moyen d'un noyau en céramique tel que décrit ci-dessus.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue schématique en coupe transversale d'un moule et d'un noyau en céramique pour la fabrication d'une aube par moulage à la cire perdue,
[Fig. 2] la figure 2 est une vue schématique en coupe axiale d'un moule et d'un noyau en céramique pour la fabrication d'une aube par moulage à la cire perdue,
[Fig. 3] la figure 3 est une vue schématique en coupe transversale d'une aube de turbomachine,
[Fig. 4] la figure 4 est une vue schématique partielle en perspective d'une cavité d'une aube de turbomachine, et illustre un mode de réalisation de l'invention,
[Fig. 5] la figure 5 est une vue très schématique illustrant le mode de réalisation de la figure 4,
[Fig. 6] la figure 6 est une vue schématique partielle en perspective d'une cavité d'une aube de turbomachine, et illustre un autre mode de réalisation de l'invention,
[Fig. 7] la figure 7 est une vue très schématique illustrant le mode de réalisation de la figure 6, et
[Fig. 8] la figure 8 est une vue schématique partielle en perspective de motifs en creux d'un noyau pour la réalisation de la cavité du mode de réalisation de la figure 6.

### Description détaillée de l'invention

Les figures 1 à 3 ont été décrites dans ce qui précède et illustrent la technique antérieure. Elles illustrent également l'invention dans la mesure où la description de ces figures s'applique à l'invention.

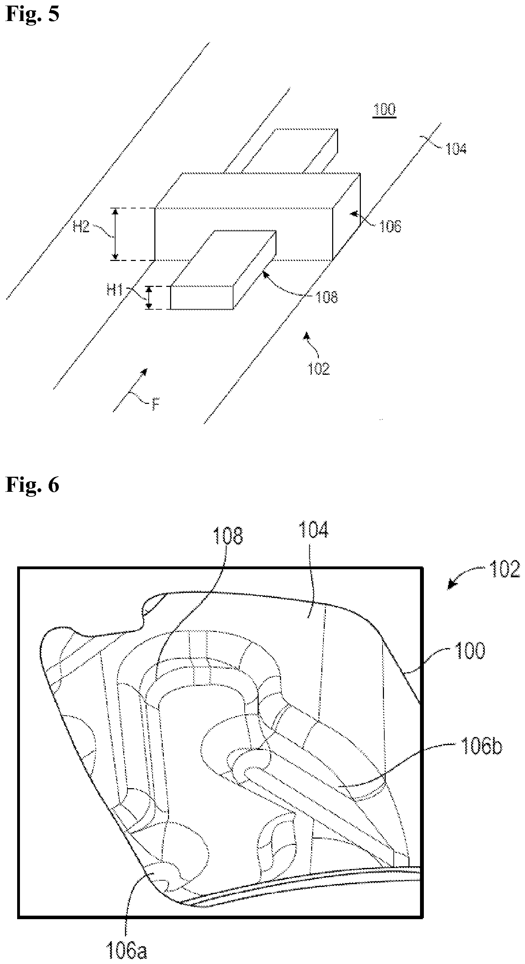

Les figures 4 et 5 illustrent un premier mode de réalisation de l'invention. La figure 4 montre une cavité 100 d'une aube 102 qui est partiellement visible et qui peut être considérée comme similaire à celle représentée à la figure 3.

La cavité 100 a une forme générale allongée et est formée grâce à un noyau, comme évoqué dans ce qui précède et de manière connue par un homme du métier spécialisé dans la fabrication d'une aube par moulage à la cire perdue. La cavité 100 comprend une paroi 104 sur laquelle sont situés des éléments en saillie 106, 108.

Dans la présente demande, on entend par un premier élément en saillie, référencé 106, un élément qui est configuré pour former un perturbateur de flux d'air. Le flux d'air F qui s'écoule dans la cavité va devoir contourner cet élément qui va créer des turbulences dans le flux d'air et ainsi favoriser les échanges thermiques entre ce flux d'air F et la paroi 104 (figure 5).

Un élément 106 a en général une forme générale allongée et peut avoir une forme parallélépipédique, cylindrique, etc.

Un élément 106 s'étend dans une direction particulière et les éléments 106 d'une même cavité 100 peuvent s'étendre parallèlement les uns des autres. En général, ils s'étendent dans une direction qui est perpendiculaire ou inclinée par rapport à la direction de l'écoulement du flux d'air F dans la cavité 100 pour former des obstacles à cet écoulement.

Dans la présente demande, on entend par un deuxième élément en saillie, référencé 108, un élément qui résulte du procédé de fabrication de l'aube 102 et qui n'a pas de fonction particulière au sein de la cavité 100.

Ce deuxième élément 108 est orienté dans une deuxième direction différente de la première direction et qui est en général parallèle à la direction d'écoulement du flux F dans la cavité.

Comme on le voit dans les dessins et comme cela est évoqué dans ce qui précède, des éléments 106, 108 peuvent mutuellement se chevaucher.

Dans le mode de réalisation des figures 4 et 5, un seul des premiers éléments 106 chevauche un deuxième élément 108, sensiblement en son milieu, pour former une croix. Les directions des premiers et deuxième éléments 106, 108 sont donc sensiblement perpendiculaires dans l'exemple représenté.

Le deuxième élément 108 a une hauteur H1 qui est constante. Le premier élément 106 qui chevauche le deuxième élément 108 a une hauteur H2 qui est supérieure à H1. La hauteur H2 du premier élément 106 est également constante. La figure 4 permet de constater que la hauteur H2 est supérieure à la hauteur H3 des autres premiers éléments de la cavité.

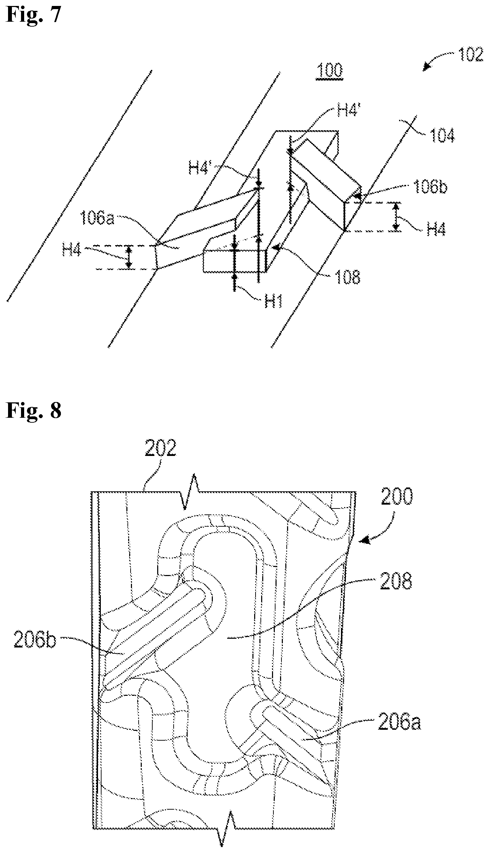

Les figures 6 et 7 illustrent un second mode de réalisation de l'invention. La figure 6 montre une cavité 100 d'une aube 102 qui est également partiellement visible.

La cavité 102 est similaire à celle du précédent mode de réalisation et comprend sur sa paroi 104 un deuxième élément en saillie 108 qui est également similaire à celui décrit dans ce qui précède.

La paroi 104 comprend en outre des premiers éléments en saillie 106a, 106b différents de ceux 106 décrit dans ce qui précède.

Chaque élément 106a, 106b a une forme générale allongée et peut avoir une forme parallélépipédique, cylindrique, etc.

Les éléments 106a, 106b s'étendent dans des directions inclinées par rapport à celle de l'élément 108. Les éléments 106a, 106b sont en outre inclinés l'un par rapport à l'autre de façon à former un chevron même s'ils ne sont pas jointifs et sont donc espacés l'un de l'autre dans l'exemple représenté.

Les éléments 106a, 106b sont ici disposés de part et d'autre de l'élément 108 et forment ainsi des branches latérales de l'élément 108. L'élément 106a s'étend de manière inclinée et rejoint une extrémité supérieure de l'élément 108, tandis que l'élément s'étend de manière inclinée et rejoint une extrémité inférieure de l'élément 108.

Le deuxième élément 108 a une hauteur H1 qui est constante. Les éléments 106a, 106b ont des hauteurs H4, H4' variables. La hauteur H4' maximale des éléments 106a, 106b est située au niveau des extrémités de ces éléments situées dans les zones de chevauchement, tandis que la hauteur H4 est celle des extrémités opposées de ces éléments.

Les éléments 106a, 106b se présentent ici sous le forme de rampes. La hauteur H4 est supérieure à la hauteur des autres premiers éléments de la cavité qui ne chevauchent pas un deuxième élément.

La dernière figure montre partiellement un noyau 200 en céramique pour la fabrication d'une aube 102 et en particulier d'une cavité 100 de cette aube selon le second mode de réalisation décrit dans ce qui précède.

Ce noyau 200 comporte une partie 202 configurée pour former la cavité 100 et comporte, d'une part, des premiers motifs en creux 206a, 206b orientés dans des premières directions et configurés pour former les éléments 106a, 106b, et d'autre part, au moins un deuxième motif en creux 208 orienté dans une deuxième direction différente des premières directions et formant un logement pour une entretoise 14.

Ce deuxième motif 208 et les premiers motifs 206a, 206b se chevauchent mutuellement dans une zone et ces premiers motifs 206a, 206b ont une profondeur supérieure à celle du deuxième motif 208 dans ladite zone. On comprend donc que les premiers motifs 206a, 206b sont davantage en retrait (plus profonds) que le deuxième motif 208 et que ces différences de profondeur sont déterminées pour obtenir des différences de hauteur des éléments en saillie 106a, 106b, 108 à l'intérieur de la cavité de l'aube à réaliser.

Lors de la fabrication de l'aube par moulage à la cire perdue, le métal en fusion coulé dans le moule va occuper les espaces vides laissés par la cire et les entretoises 14. Le métal en fusion va ainsi occuper l'espace des motifs en creux 206a, 206b, 208 pour donner les éléments en saillie 106a, 106b, 108 visibles aux figures 5 et 6.

## Revendications

1. Aube (102) de turbomachine d'aéronef, cette aube comportant au moins une cavité interne (100) de circulation d'un flux d'air de ventilation, cette cavité comportant une paroi (104) qui comprend des premiers éléments en saillie (106, 106a, 106b) orientés dans au moins une première direction et formant des perturbateurs du flux d'air, cette paroi comportant en outre au moins un deuxième élément en saillie (108) orienté dans au moins une deuxième direction différente de la première direction, ce deuxième élément et au moins un des premiers éléments se chevauchant mutuellement dans une zone, **caractérisée en ce que** le ou chaque premier élément qui chevauche le deuxième élément a une hauteur (H2, H4') supérieure à celle (H1) du deuxième élément dans ladite zone et qui est supérieure à celle (H3) des autres premiers éléments de la paroi, pour conserver sa fonction de perturbateur sur toute son étendue.

2. Aube (102) selon la revendication 1, dans laquelle les directions des premiers et deuxième éléments (106, 108) sont sensiblement perpendiculaires l'une par rapport à l'autre.

3. Aube (102) selon la revendication 1, dans laquelle les directions des premiers et deuxième éléments (106a, 106b, 108) sont inclinées l'une par rapport à l'autre.

4. Aube (102) selon l'une des revendications précédentes, dans laquelle le ou chaque premier élément (106, 106a, 106b) et/ou ledit deuxième élément (108) a une forme générale allongée.

5. Aube (102) selon l'une des revendications précédentes, dans laquelle un seul des premiers éléments (106) chevauche ledit deuxième élément (108) et forme avec ce dernier une croix.

6. Aube (102) selon l'une des revendications précédentes, dans laquelle deux des premiers éléments (106a, 106b) chevauchent ledit deuxième élément (108) et forment des branches sur deux côtés opposés de ce deuxième élément.

7. Aube (102) selon l'une des revendications précédentes, dans laquelle le ou chaque premier élément (106a, 106b) qui chevauche ledit deuxième élément (108) a une hauteur (H4, H4') qui varie et est maximale dans ladite zone.

8. Noyau (200) en céramique pour la fabrication d'une aube (102) selon l'une des revendications précédentes, par un procédé de fabrication par moulage à cire perdue, ce noyau comportant une partie configurée pour former ladite cavité interne (100) et comportant, d'une part, des premiers motifs en creux (206a, 206b) orientés dans au moins une première direction et configurés pour former lesdits premiers éléments en saillie (106a, 106b), et d'autre part, au moins un deuxième motif en creux (208) orienté dans au moins une deuxième direction différente de la première direction et formant un logement pour une entretoise, ce deuxième motif et au moins un des premiers motifs se chevauchant mutuellement dans une zone, **caractérisé en ce que** le ou chaque premier motif qui chevauche le deuxième motif a une profondeur supérieure à celle du deuxième motif dans ladite zone et supérieure à celle des autres premiers motifs en creux.

9. Procédé de fabrication d'une aube selon l'une des revendications 1 à 7, par un procédé de fabrication par moulage à cire perdue, au moyen d'un noyau en céramique selon la revendication 8.

## Patentansprüche

1. Schaufel (102) einer Turbomaschine eines Luftfahrzeugs, wobei diese Schaufel mindestens einen Innenhohlraum (100) zum Zirkulieren eines Lüftungsluftstroms umfasst, wobei dieser Hohlraum eine Wand (104) umfasst, die erste hervorstehende Elemente (106, 106a, 106b) umfasst, die in mindestens eine erste Richtung ausgerichtet sind, und Störungen des Luftstroms bilden, wobei diese Wand weiter mindestens ein zweites hervorstehendes Element (108) umfasst, das in mindestens eine zweite Richtung, die sich von der ersten Richtung unterscheidet, ausgerichtet ist, wobei dieses zweite Element und mindestens eines der ersten Elemente einander in einer Zone überschneiden, **dadurch gekennzeichnet, dass** das oder jedes erste Element, das sich mit dem zweiten Element überschneidet, eine Höhe (H2, H4') aufweist, die größer als jene (H1) des zweiten Elements in der Zone ist, und die größer als jene (H3) der anderen ersten Elemente der Wand ist, um seine Störungsfunktion über seine gesamte Erstreckung beizubehalten.

2. Schaufel (102) nach Anspruch 1, wobei die Richtungen des ersten und zweiten Elements (106, 108) im Wesentlichen senkrecht zueinander sind.

3. Schaufel (102) nach Anspruch 1, wobei die Richtungen des ersten und zweiten Elements (106a, 106b, 108) zueinander geneigt sind.

4. Schaufel (102) nach einem der vorstehenden Ansprüche, wobei das oder jedes erste Element (106, 106a, 106b) und/oder das zweite Element (108) eine allgemeine längliche Form aufweisen.

5. Schaufel (102) nach einem der vorstehenden Ansprüche, wobei sich ein einziges der ersten Elemente (106) mit dem zweiten Element (108) überschneidet und mit diesem letzteren ein Kreuz bildet.

6. Schaufel (102) nach einem der vorstehenden Ansprüche, wobei sich zwei der ersten Elemente (106a, 106b) mit dem zweiten Element (108) überschneiden und Äste auf zwei gegenüberliegenden Seiten dieses zweiten Elements bilden.

7. Schaufel (102) nach einem der vorstehenden Ansprüche, wobei das oder jedes erste Element (106a, 106b), das sich mit dem zweiten Element (108) überschneidet, eine Höhe (H4, H4') aufweist, die variiert, und in der Zone am größten ist.

8. Kern (200) aus Keramik zur Herstellung einer Schaufel (102) nach einem der vorstehenden Ansprüche durch ein Herstellungsverfahren durch Wachsausschmelzguss, wobei dieser Kern einen Teil umfasst, der konfiguriert ist, um den Innenhohlraum (100) zu bilden, und einerseits erste Hohlmotive (206a, 206b) umfasst, die in mindestens eine erste Richtung ausgerichtet sind, und konfiguriert sind, um die ersten hervorstehenden Elemente (106a, 106b) zu bilden, und andererseits mindestens ein zweites Hohlmotiv (208), das in mindestens eine zweite Richtung ausgerichtet ist, die sich von der ersten Richtung unterscheidet, und eine Aufnahme für einen Abstandhalter bildet, umfasst, wobei dieses zweite Motiv und mindestens eines der ersten Motive einander gegenseitig in einer Zone überschneiden, **dadurch gekennzeichnet, dass** das oder jedes erste Motiv, das sich mit dem zweiten Motiv überschneidet, eine Tiefe aufweist, die in der Zone größer als jene des zweiten Motivs ist, und größer als jene der anderen ersten Hohlmotive ist.

9. Verfahren zur Herstellung einer Schaufel nach einem der Ansprüche 1 bis 7, durch ein Herstellungsverfahren durch Wachsausschmelzguss, anhand eines Kerns aus Keramik nach Anspruch 8.

## Claims

1. Aircraft turbine engine blade (102), this blade comprising at least one inner cavity (100) for circulating a ventilation air flow, this cavity comprising a wall (104) which comprises first projecting elements (106, 106a, 106b) oriented in at least one first direction and forming air flow disrupters, this wall further comprising at least one second projecting element (108) oriented in at least one second direction different from the first direction, this second element and at least one of the first elements overlap each other in an area, **characterised in that** the or each first element which overlaps the second element has a height (H2, H4') greater than that (H1) of the second element in said area and which is greater than that (H3) of the other first elements of the wall, to retain its disruptive function over the entire length thereof.

2. Blade (102) according to claim 1, wherein the directions of the first and second elements (106, 108) are substantially perpendicular to one another.

3. Blade (102) according to claim 1, wherein the directions of the first and second elements (106a, 106b, 108) are inclined against one another.

4. Blade (102) according to one of the preceding claims, wherein the or each first element (106, 106a, 106b) and/or said second element (108) has a general elongated shape.

5. Blade (102) according to one of the preceding claims, wherein only one of the first elements (106) overlaps said second element (108) and forms a cross with the latter.

6. Blade (102) according to one of the preceding claims, wherein two of the first elements (106a, 106b) overlap said second element (108) and form branches on two opposite sides of this second element.

7. Blade (102) according to one of the preceding claims, wherein the or each first element (106a, 106b) which overlaps said second element (108) has a height (H4, H4') which varies and is maximum in said area.

8. Ceramic core (200) for the manufacture of a blade (102) according to one of the preceding claims, by a method for manufacturing by lost-wax casting, this core comprising a part configured to form said inner cavity (100) and comprising, on the one hand, first hollow units (206a, 206b) oriented in at least one first direction and configured to form said first projecting elements (106a, 106b), and on the other hand, at least one second hollow unit (208) oriented in at least one second direction different from the first direction and forming a housing for a spacer, this second unit and at least one of the first units overlapping each other in an area, **characterised in that** the or each first unit which overlaps the second unit has a depth greater than that of the second unit in said area and greater than that of other first hollow units.

9. Method for manufacturing a blade according to one of claims 1 to 7, by a method for manufacturing by lost-wax casting, by means of a ceramic core according to claim 8.
